# EUROPÄISCHE PATENTSCHRIFT

(11) **EP 2 126 522 B1**
(45) Veröffentlichungstag und Bekanntmachung des Hinweises auf die Patenterteilung: **11.05.2016**
(21) Anmeldenummer: 07723026.6
(22) Anmeldetag: 02.03.2007
(51) Int. Cl.: G01F 1/74, G01F 1/64, A01J 5/01

(54) **VORRICHTUNG UND VERFAHREN ZUR MENGENERFASSUNG BEI DER ANNAHME UND/ODER ABGABE EINER EINEN GASANTEIL AUFWEISENDEN FLÜSSIGKEIT**
DEVICE AND METHOD FOR DETECTING A VOLUME WHILE RECEIVING AND/OR DISCHARGING A FLUID HAVING A GAS PORTION
DISPOSITIF ET PROCÉDÉ DE DÉTECTION DE QUANTITÉ LORS DE LA RÉCEPTION ET/OU DU PRÉLÈVEMENT D'UN LIQUIDE CONTENANT UNE FRACTION GAZEUSE

(43) Veröffentlichungstag der Anmeldung: 02.12.2009
(73) Patentinhaber: BARTEC BENKE GmbH, 21465 Reinbek/Hamburg (DE)
(72) Erfinder: BÖHM, Alfred, 94234 Viechtach (DE); AMANN,Hans-Peter, 84095 Fürth (DE)
(74) Vertreter: Kohl, Karl-Heinz
(86) Internationale Anmeldenummer: PCT/EP2007/001833
(87) Internationale Veröffentlichungsnummer: WO 2008/106989

(56) Entgegenhaltungen:
- EP-A2- 0 341 675
- WO-A-00/34767
- DE-A1- 3 404 581
- DE-A1- 10 156 450
- DE-A1-102005 005 295
- GB-A- 2 306 660
- US-A- 6 032 539

## Beschreibung

Die Erfindung betrifft eine Vorrichtung zur Mengenerfassung bei der Annahme und/oder Abgabe einer einen Gasanteil aufweisenden Flüssigkeit, insbesondere Milch oder Kraftstoff, gemäß dem Oberbegriff des Anspruchs 5. Eine solche Vorrichtung ist ausgebildet mit einer Messleitung zum Durchleiten der Flüssigkeit, einer Durchflussmesseinrichtung für die Flüssigkeit, die mit der Messleitung in Fluidverbindung steht, einer Füllgradmesseinrichtung für die Flüssigkeit, die mit der Messleitung in Fluidverbindung steht und die eine Elektrodenanordnung zum Bestimmen von elektrischen Eigenschaften der in der Messleitung befindlichen Flüssigkeit aufweist, und einer Auswerteeinrichtung zum Bestimmen der durch die Messleitung geförderten Flüssigkeitsmenge, die mit der Füllgradmesseinrichtung und der Durchflussmesseinrichtung in Signalverbindung steht.

Die Erfindung betrifft weiterhin ein Verfahren zur Mengenerfassung einer in einer Messleitung strömenden, einen Gasanteil aufweisenden Flüssigkeit, beispielsweise Milch oder Kraftstoff, gemäß dem Oberbegriff des Anspruchs 1. Bei dem Verfahren ist vorgesehen, dass in der Messleitung mittels einer Füllgradmesseinrichtung eine Füllgradmessung durchgeführt wird, in der Messleitung mittels einer Durchflussmesseinrichtung eine Durchflussmessung durchgeführt wird und die geförderte Flüssigkeitsmenge aus den Ergebnissen der Durchflussmessung und denen der Füllgradmessung berechnet wird.

Eine gattungsgemäße Vorrichtung und ein gattungsgemäßes Verfahren sind beispielsweise aus der DE 10 2005 005 295 A1 bekannt. Diese Druckschrift lehrt, zur Fördermengenerfassung eine Durchflussmessung an der Mess- und Förderleitung durchzuführen, durch welche die Flüssigkeit geleitet wird. Um auch beim Vorliegen von Gaseinschlüssen in der Flüssigkeit exakte Messergebnisse liefern zu können, wird an der Messleitung ferner eine Füllgradmessung durchgeführt, das heißt es wird der Flüssigkeitsgehalt im Leitungsquerschnitt bestimmt, der sich aus dem Gesamtquerschnitt abzüglich des Gasgehaltes ergibt. Die resultierenden Messergebnisse werden zur Kompensation der Ergebnisse der Durchflussmessung eingesetzt. Zur Füllgradmessung kann nach der DE 10 2005 005 295 A1 eine Kapazitätsmessung oder eine Leitfähigkeitsmessung vorgesehen sein.

Die DE 101 56 450 A1 offenbart ein Verfahren und eine Vorrichtung zur Bestimmung eines Massenstromes von Milch, die während eines Melkvorganges fließt. In dieser Druckschrift ist beschrieben, eine Kapazität oder eine hierzu proportionale Kenngröße im Messvolumen zu ermitteln, die Kapazität mit vorbekannten Kapazitäten zu vergleichen, die Geschwindigkeit des Milchstromes zu ermitteln und aus den genannten Daten den Milchstrom zu bestimmen.

Die DE 195 40 884 C2 und die EP 0 855 576 A1 offenbaren Verfahren und Anlagen zum Messen des Volumens strömender Flüssigkeiten unter Meidung von Messfehlern durch unzulässig hohe Gasanteile. Entsprechend der Lehre dieser Druckschriften ist im Leitungsverlauf oberstromig eines Volumenzählers ein Entgasungsbehälter vorgesehen, in welchem Gasanteile abgeschieden werden sollen, so dass diese die Volumenmessung nicht beeinflussen. Ferner ist ein optischer Gasblasensensor vorgesehen. Überschreitet der vom Gasblasensensor gemessene Wert einen zulässigen Wert, ab dem eine zuverlässige Gasabscheidung möglicherweise nicht mehr stattfinden kann, sorgt eine entsprechende Steuerung beispielsweise durch Verstellen von Ventilen für eine Änderung des Flüssigkeitsstromes, bis der zulässige Wert wieder erreicht wird oder unterschritten wird. Insbesondere aufgrund des erforderlichen Gasabscheiders können derartige Anlagen jedoch vergleichsweise aufwändig sein und ein vergleichsweise hohes Gewicht und einen hohen Raumbedarf aufweisen.

Eine weitere Messvorrichtung für eine Flüssigkeitsströmung ist aus der DE 691 21 181 T2 bekannt. Hierin ist vorgesehen, die Homogenität der Flüssigkeit zu messen und zum Zwecke der Entgasung ein Ventil im Strömungsverlauf zu schließen, wenn die Inhomogenität, die durch den Gasgehalt gebildet ist, einen Grenzwert übersteigt.

Aus der DE 197 33 715 C1 ist ein weiteres Messverfahren für Flüssigkeiten bekannt, bei dem die abgegebene Menge mittels eines Volumenzählers gemessen wird und die Abgabe unterbrochen wird, wenn der Gasanteil einen bestimmten Wert übersteigt.

Indem, wie insbesondere aus der DE 10 2005 005 295 A1 bekannt, Gasanteile nicht abgeschieden sondern bei der Durchflussmessung toleriert, messtechnisch erfasst und zur Bestimmung der Fördermenge herangezogen werden, können unerwünschte Unterbrechungen des Produktstromes bei Gasbeladung in der Regel entfallen und ein Gasabscheider ist nicht erforderlich. Hierdurch ist verglichen mit Messeinrichtungen mit Gasabscheider eine erhebliche Vereinfachung des konstruktiven Aufbaus und eine dramatische Gewichtsreduzierung gegeben. Ferner ist eine besonders schnelle Abgabe möglich und auch die Entrestung der Anlage ist erheblich vereinfacht, da kein großvolumiger Gasabscheider entleert werden muss. Allerdings stellen insbesondere die Eichvorschriften hohe Anforderungen an die Präzision der Füllgradmessung, da die Ergebnisse dieser Messung unmittelbar in das Messergebnis für die Fördermenge einfließen.

GB 2 306 660 offenbart eine Messeinrichtung zur kapazitiven Messung der elektrischen Eigenschaften einer Flüssigkeit. In einem Ausführungsbeispiel sind die Elektroden der Messeinrichtung als Plattenstapel mit zwei Plattengruppen angeordnet, die eine Interdigitalstruktur bilden. Durch diese Anordnung wird die Kapazität der Elektroden maximiert.

**Aufgabe** der Erfindung ist es, eine Vorrichtung und ein Verfahren zur Mengenerfassung einer einen Gasanteil aufweisenden Flüssigkeit anzugeben, die bei besonders geringem konstruktiven Aufwand eine besonders hohe Messpräzision ermöglichen.

Die Aufgabe wird erfindungsgemäß durch eine Vorrichtung mit den Merkmalen des Anspruchs 5 und ein Verfahren mit den Merkmalen des Anspruchs 1 gelöst. Bevorzugte Ausführungsbeispiele sind in den abhängigen Ansprüchen angegeben.

Die erfindungsgemäße Vorrichtung ist u.a. dadurch gekennzeichnet, dass die Elektrodenanordnung der Füllgradmesseinrichtung eine Vielzahl von Elektrodenplatten aufweist, die im Bereich der Messleitung einen Plattenstapel bilden.

Ein Aspekt der Erfindung besteht darin, Gasanteile in der Flüssigkeit jedenfalls bis zu einem bestimmten Grad bei der Durchflussmessung zu tolerieren und mittels einer Füllgradmesseinrichtung zu erfassen, so dass ein Gasabscheider entfallen kann und folglich eine konstruktiv besonders einfache Messvorrichtung gegeben ist. Nach der Erfindung ist die Füllgradmesseinrichtung dabei zur elektronischen Messung der Flüssigkeit ausgebildet und weist eine Vielzahl, d.h. drei oder mehr, geschichtete Elektrodenplatten als ein Elektrodenplattenpaket auf.

In dem resultierenden Plattenstapel sind die Elektrodenplatten geeigneterweise so angeordnet, dass die Flachseiten benachbarter Elektrodenplatten einander zugewandt sind. Zwischen den Elektrodenplatten sind Kanäle ausgebildet, durch welche die Flüssigkeit hindurchströmen kann. Durch die gestapelte Anordnung einer Vielzahl von Elektrodenplatten kann in einfacher Weise ein geringer Elektrodenabstand und ein besonders homogener Feldverlauf realisiert werden. Der geringe Elektrodenabstand und insbesondere die damit einhergehende vergleichsweise große Kapazität erlaubt eine besonders hohe Empfindlichkeit der Füllgradmesseinrichtung. Die homogene Feldverteilung kann gewährleisten, dass Gaseinschlüsse bestimmter Größe über dem gesamten Querschnitt der Messleitung zumindest annähernd dasselbe Messsignal liefern, Randeffekte also vermieden werden und eine besonders hohe Messgenauigkeit bei der Füllgradmessung gegeben ist. Dabei ermöglicht die Erfindung eine gute Messgenauigkeit sowohl bei hohen als auch bei geringen Füllgraden, also sowohl bei einem niedrigen Gehalt an ungelöstem Gas als auch bei einem hohen Gehalt an ungelöstem Gas. Gleichzeitig ermöglicht es die Ausgestaltung der Füllgradmesseinrichtung mit einem Plattenstapel, bei geringem apparativem Aufwand große Messleitungsquerschnitte vorzusehen. Hierdurch lassen sich ein geringer Strömungswiderstand und somit hohe Durchsatzraten für die durchströmende Flüssigkeit erzielen.

Die Erfindung gewährleistet darüber hinaus ein besonders hohes Maß an Manipulationssicherheit. Alle zur Mengenerfassung erforderlichen Elemente, insbesondere die Durchflussmesseinrichtung und die Füllgradmesseinrichtung, können in einfacher und übersichtlicher Weise an einem Messrohr angeordnet werden, so dass eine Manipulation visuell sofort erkennbar ist. Verglichen mit vorbekannten Anlagen mit Gasabscheidern ist die erfindungsgemäße Vorrichtung überdies erheblich kompakter und daher auch übersichtlicher.

Unter dem Füllgrad kann insbesondere der Flüssigkeitsgehalt in der Leitung verstanden werden. Der Füllgrad kann somit ein Maß für den Teil des Leitungsquerschnittes darstellen, in welchem Flüssigkeit und kein ungelöstes Gas vorliegt. Bei ruhenden Flüssigkeiten ergibt sich der Füllgrad aus dem Füllpegel, also der Höhe der Pegelfläche. Bei strömenden Flüssigkeiten können Gaseinschlüsse auch im Bodenbereich der Messleitung vorliegen, so dass der Füllgrad entsprechend vermindert sein kann.

Zur Förderung der Flüssigkeit durch die Messeleitung kann an dieser eine Pumpeinrichtung angeordnet sein. Die Flüssigkeit kann aber auch alleine durch Schwerkraftwirkung gefördert werden.

Für eine besonders genaue Füllgradmessung ist es erfindungsgemäß zweckmäßig, dass zumindest eine der Elektrodenplatten des Plattenstapels im Inneren der Messleitung angeordnet ist. Insbesondere die beiden äußersten Elektrodenplatten, welche den Plattenstapel oberseitig und unterseitig abschließen, können jedoch auch außerhalb der Messleitung oder in der Wand der Messleitung angeordnet sein.

Eine besonders gleichmäßige Feldverteilung und somit eine besonders gute Messgenauigkeit sowie besonders einfach interpretierbare Messergebnisse können nach der Erfindung dadurch erhalten werden, dass zumindest zwei, vorzugsweise alle Elektrodenplatten des Plattenstapels parallel zueinander verlaufen, dass die Elektrodenplatten des Plattenstapels äquidistant angeordnet sind, dass die Elektrodenplatten des Plattenstapels zumindest annähernd dieselbe Oberflächengröße aufweisen und/oder dass die Elektrodenplatten des Plattenstapels ebene Rechteckplatten sind. Insbesondere um den Randbedingungen Rechnung zu tragen kann nach der Erfindung auch vorgesehen sein, dass sich die äußersten Elektrodenplatten des Plattenstapels, welche den Plattenstapel abschließen, in Form, Größe, Dicke oder in sonstigen Eigenschaften von den verbleibenden Elektrodenplatten des Plattenstapels unterscheiden.

Außer ebenen Platten, insbesondere Rechteckplatten, können nach der Erfindung grundsätzlich auch Zylinderplatten gegeben sein, die geeigneterweise koaxial angeordnet sind, so dass insbesondere ein Mehrschichtzylinderkondensator gegeben ist. In diesem Fall kann vorgesehen sein, die Abstände benachbarter Elektrodenplatten im Plattenstapel nicht äquidistant, sondern derart vorzusehen, dass zwischen jedem benachbarten Elektrodenplattenpaar stets dieselbe Kapazität gegeben ist. Um zu gewährleisten, dass Gaseinschlüsse unabhängig von ihrer Position im Querschnitt der Messleitung zumindest annähernd dasselbe Messsignal generieren, ist es bei einer Zylinderplattenanordnung vorteilhaft, eine möglichst große Zahl von Elektrodenplatten zu verwenden.

Für einen besonders niedrigen Strömungswiderstand und somit hohe Förderraten bei niedrigem Aufwand ist es vorteilhaft, dass die Elektrodenplatten in Längsrichtung der Messleitung verlaufen und/oder dass zwischen den Elektrodenplatten Durchgangskanäle für die Flüssigkeit ausgebildet sind, die sich in Längsrichtung der Messleitung erstrecken. Bei diesem Ausführungsbeispiel kann die Füllgradmesseinrichtung, die auch als Gasblasensensor bezeichnet werden kann, gleichzeitig als Gleichrichter für die Flüssigkeitsströmung dienen. Dies ist im Hinblick auf die Messgenauigkeit insbesondere dann von Vorteil, wenn die Füllgradmesseinrichtung oberstromig der Durchflussmesseinrichtung angeordnet ist.

Im Hinblick auf die Messpräzision ist es weiter besonders vorteilhaft, dass der Außenquerschnitt des Plattenstapels zumindest annähernd dem, vorzugsweise rechteckigen, Innenquerschnitt der Messleitung entspricht. Hierdurch können Gaseinschlüsse über dem gesamten Strömungsquerschnitt erfasst werden. Für eine besonders einfache Bauform bei homogener Feldverteilung sind der Plattenstapel und die Leitung im Leitungsinneren geeigneterweise mit rechteckigem Querschnitt ausgebildet. Grundsätzlich kann auch vorgesehen sein, den Plattenstapel querschnittskleiner als die Messleitung auszubilden, wobei dann der innerhalb des Plattenstapels bestimmte Füllgrad rechnerisch auf den gesamten Innenquerschnitt der Messleitung hochgerechnet werden kann. Dies kann insbesondere dann vorgesehen sein, wenn eine gleichmäßige Verteilung der Gaseinschlüsse über dem Querschnitt der Messleitung zu erwarten ist.

Der messtechnische Aufwand kann weiter dadurch reduziert werden, dass die Elektrodenplatten des Plattenstapels zu zwei Plattengruppen elektrisch zusammengeschaltet sind, die vorzugsweise eine Interdigitalstruktur bilden. Insbesondere können die im Plattenstapel aufeinander folgenden Elektrodenplatten zur Bildung der fingerartig ineinander greifenden Interdigitalstruktur alternierend elektrisch miteinander verbunden sein. Die elektrische Verbindung ist für einen besonders niedrigen Aufwand geeigneterweise im Inneren der Messleitung gegeben. Beispielsweise können zur Verbindung quer zu den Elektrodenplatten verlaufende Verbindungsplatten vorgesehen sein, an denen jeweils eine elektrische Leitung zur Auswerteeinrichtung angeordnet ist.

Vorzugsweise handelt es sich bei der Füllgradmesseinrichtung um eine kapazitive Messeinrichtung. Bei einer solchen kapazitiven Messeinrichtung werden die Elektrodenplatten zweckmäßigerweise mit einer zeitlich variablen Spannung beaufschlagt. Einer kapazitiven Messung liegt der Gedanke zugrunde, dass Gaseinschlüsse in der Regel eine andere Dielektrizitätszahl aufweisen als die Flüssigkeit und sich somit die Dielektrizitätszahl des zwischen den Platten angeordneten Mediums mit dem Gasanteil ändert. Zur Füllgradbestimmung wird die Kapazität zwischen den Elektrodenplatten oder eine hiermit korrelierte Messgröße, beispielsweise die Dielektrizitätszahl, erfasst und diese durch geeignete Methoden mit dem Füllgrad in Beziehung gesetzt.

Die erfindungsgemäße Vorrichtung ist, insbesondere bei Verwendung einer kapazitiven Füllgradmesseinrichtung, besonders geeignet zur Messung von nicht leitenden Flüssigkeiten, wie Heizöl, Diesel und anderen Kraftstoffen.

Um die Messgenauigkeit zu erhöhen, kann es insbesondere bei kapazitiven Messungen vorteilhaft sein, dass die Elektrodenplatten gegenüber dem Inneren der Messleitung elektrisch isoliert ausgebildet sind. Geeigneterweise sind die leitfähigen Elektrodenplatten beschichtet ausgebildet, wodurch sich beispielsweise unerwünschte Absorptionseffekte vermeiden lassen.

Eine konstruktiv besonders einfache Vorrichtung ist dadurch gegeben, dass die Durchflussmesseinrichtung ein mechanischer Durchflusssensor ist. Die Durchflussmesseinrichtung kann beispielsweise zum Messen des Volumenstromes und/oder des Massenstromes ausgebildet sein. Vorzugsweise handelt es sich bei der Durchflussmesseinrichtung um einen Turbinenzähler. Ein Turbinenzähler weist eine Messturbine auf, welche durch die strömende Flüssigkeit in Rotation versetzt wird. Die Drehbewegung der Messturbine kann berührungslos über einen beispielsweise magnetischen Sensor abgegriffen werden, der vorzugsweise zumindest zwei um 90° phasenverschobene Aufnehmer aufweist. Die vom Sensor bestimmte Impulszahl ist ein Maß für die Drehzahl und diese wiederum ein Maß für den aktuellen Durchfluss. Erfindungsgemäß kann der Turbinenzähler auch drei oder mehr Impulsaufnehmer aufweisen, wodurch die Messsicherheit erhöht werden kann, da unter Umständen auftretende Fehler besser detektiert und gegebenenfalls korrigiert werden können. Mittels eines Turbinenzählers kann eine sehr hohe Messgenauigkeit von beispielsweise weniger als ± 0,3% vom Messwert erhalten werden, wobei die Genauigkeit in der Regel von der Viskosität und somit von der Zusammensetzung und der Temperatur des Produktes, aber auch von der Fließgeschwindigkeit und vom Druck abhängt. Darüber hinaus ermöglicht es ein Turbinenzähler, die Messleitung im Bereich der Durchflussmesseinrichtung geradlinig auszubilden, also die Zulauföffnung und die Ablauföffnung der Durchflussmesseinrichtung fluchtend anzuordnen, was mit einer erheblichen konstruktiven Vereinfachung einhergehen kann.

Zweckmäßigerweise ist nach der Erfindung ein Tank vorgesehen, an dem die Messleitung, insbesondere fest, angeordnet ist. Insbesondere kann die Messanlage an einem Tankfahrzeug, beispielsweise an einem Heizölfahrzeug vorgesehen sein.

Für ein besonders gutes Strömungsbild und für eine besonders kompakte Bauform, die insbesondere für Tankfahrzeuge besonders geeignet ist, ist es vorteilhaft, dass die Messleitung, insbesondere im Bereich der Durchflussmesseinrichtung und der Füllgradmesseinrichtung, geradlinig ausgebildet ist. Vorzugsweise ist zumindest der Messleitungsbereich zwischen diesen beiden Messeinrichtung geradlinig ausgebildet. Durch eine geradlinige Ausführung können auch unerwünschte Verwirbelungen verhindert werde, welche die Messgenauigkeit beeinträchtigen könnten.

Ferner ist es vorteilhaft, dass die Messleitung, insbesondere im Bereich der Durchflussmesseinrichtung und/oder der Füllgradmesseinrichtung, unter einem Winkel zur Horizontalen verläuft, wobei die Höhe der Messleitung vorzugsweise mit zunehmendem Abstand vom Tank abnimmt. Hierdurch kann eine automatische Entlüftungsfunktion realisiert werden, bei der sich insbesondere beim Befüllen des Systems ansammelnde Gasblasen selbständig nach oben von den Messeinrichtungen hinweg beispielsweise zu einer Entgasungsöffnung hin bewegen. Der Winkel zur Horizontalen kann beispielsweise etwa 30° betragen.

Zur Erhöhung der Manipulationssicherheit gegenüber bewussten Gasbeimengungen ist es zweckmäßig, dass die Durchflussmesseinrichtung und die Füllgradmesseinrichtung im Verlauf der Messleitung unmittelbar hintereinander angeordnet sind. Dies ist insbesondere dann vorteilhaft, wenn die Füllgradmesseinrichtung im Strömungsverlauf oberstromig der Durchflussmesseinrichtung, also im Leitungsverlauf näher am Abgabetank angeordnet ist. So erfasst die erfindungsgemäße Füllgradmesseinrichtung nämlich nicht nur unbeabsichtigt beigemischte Gasanteile sondern auch bewusst zu Manipulationszwecken beigemengte Anteile. Die Messung kann somit bei oberstromig angeordneter Füllgradmesseinrichtung nur dadurch manipuliert werden, dass Gas im Bereich zwischen der Füllgradmesseinrichtung und der Durchflussmesseinrichtung eingeleitet wird, da nur in diesem Fall das Gas von der Durchflussmesseinrichtung mitgezählt wird und die Fehlmessung nicht durch die Füllgradmesseinrichtung kompensiert wird. Wird unterstromig der beiden Messeinrichtungen Gas zugeführt, so beeinflusst dies die ermittelten Messwerte nicht, da das Gas nicht zu den Messeinrichtungen gelangt. Wird oberstromig der beiden Messeinrichtungen Gas zugeführt, so wird dieses zwar bei der Durchflussmessung eventuell mitgemessen, jedoch auch von der Füllgradmesseinrichtung erfasst und somit bei der Flüssigkeitsmengenberechnung berücksichtigt. Durch Anordnung der beiden Messeinrichtungen unmittelbar hintereinander wird der Leitungsbereich, der eine Manipulation erlaubt, verkleinert, so dass eine Manipulation erheblich erschwert ist. Insbesondere kann dieser Bereich seitens der Eichbehörden eindeutig gekennzeichnet werden, so dass eine Überprüfung jederzeit möglich ist. Zur weiteren Erhöhung der Manipulationssicherheit kann vorgesehen sein, dass die Durchflussmesseinrichtung und die Füllgradmesseinrichtung eine Funktionseinheit bilden.

Die Manipulationssicherheit kann weiter dadurch erhöht werden, dass die Füllgradmesseinrichtung unterstromig der Durchflussmesseinrichtung angeordnet wird, die Durchflussmesseinrichtung also näher am Abgabetank angeordnet wird als die Füllgradmesseinrichtung. In diesem Fall ist eine Manipulation durch Gaseinleitung nur dann möglich, wenn das Gas oberstromig der Durchflussmesseinrichtung zugeführt wird, das Gas aber auch unterstromig der Durchflussmesseinrichtung vor Erreichen der Füllgradmesseinrichtung wieder aus der Leitung abgeführt wird. Nur in diesem Falle würde das Gas zwar bei der Durchflussmessung, nicht aber bei der anschließenden Füllgradmessung erfasst und somit der entsprechende Gasanteil bei der Fördermengenbestimmung nicht kompensiert. Eine Gasabführung aus der Leitung ist jedoch nur mit einem sehr hohen apparativen Aufwand möglich, der in der Regel leicht erkennbar wäre.

Nach der Erfindung ist es möglich die Füllgradmesseinrichtung oberstromig der Durchflussmesseinrichtung, d.h. näher am Abgabetank anzuordnen. Aber auch eine umgekehrte Anordnung ist möglich, bei der die Durchflussmesseinrichtung oberstromig der Füllgradmesseinrichtung angeordnet ist. Füllgradmesseinrichtung und Durchflussmesseinrichtung können somit vertauschbar angeordnet sein.

Ferner ist es nach der Erfindung besonders bevorzugt, dass eine Steuereinrichtung vorgesehen ist, mit welcher die Strömung durch die Messleitung in Abhängigkeit des gemessenen Füllgrades steuerbar ist. Dieser Ausführungsform liegt der Gedanke zugrunde, dass die Messgenauigkeit der Füllgradmesseinrichtung und/oder Durchflussmesseinrichtung unter Umständen füllgradabhängig sein kann und insbesondere bei geringen Füllgraden, d.h. hohen Gasanteilen, abnehmen kann. Die Steuereinrichtung ermöglicht es, die Strömung bei zunehmendem Gasanteil, beispielsweise zum Ende der Abgabe bei niedrigem Füllstand im Tank, zu reduzieren. Bei einer reduzierten Strömungsgeschwindigkeit ist die Gefahr des Mitreißens von Gaseinschlüssen reduziert, so dass der Füllgrad wieder steigen kann. Insbesondere kann vorgesehen sein, dass die Steuereinrichtung die Strömung durch die Messleitung erst dann beeinflusst, wenn der Gasanteil einen bestimmten Grenzwert überschreitet. Die Steuereinrichtung kann die Strömung beispielsweise stetig oder stufenweise reduzieren oder auch ganz unterbrechen. Sofern eine Pumpeinrichtung vorgesehen ist, kann die Steuereinrichtung zum Steuern der Strömung durch die Messleitung mit dieser Pumpeinrichtung in Signalverbindung stehen und zum Beeinflussen der Pumpleistung ausgebildet sein. Zum Steuern der Strömung kann aber auch ein entsprechendes Ventil an der Leitungseinrichtung vorgesehen sein, mit dem die Steuereinrichtung in Leitungsverbindung steht.

Insbesondere im Hinblick auf die Messgenauigkeit kann es von Vorteil sein, große Gasblasen vor Erreichen der Durchflussmesseinrichtung und/oder der Füllgradmesseinrichtung zu zerkleinern. Eine besonders bevorzugte Ausführungsform der Erfindung besteht somit darin, dass in der Messleitung eine Zerkleinerungseinrichtung, insbesondere ein Sieb und/oder Filter, zum Zerkleinern von Gaseinschlüssen in der Flüssigkeit vor Erreichen der Füllgradmesseinrichtung und/oder der Durchflussmesseinrichtung vorgesehen ist. Die Füllgradmesseinrichtung kann mit ihrem Plattenstapel auch selbst als Zerkleinerungseinrichtung wirken. Mittels eines Siebes und/oder Filters kann zugleich verhindert werden, dass unerwünschte Partikel in die Messstrecke eindringen.

Das erfindungsgemäße Verfahren ist u.a. dadurch gekennzeichnet, dass die Füllgradmesseinrichtung eine Vielzahl von Elektrodenplatten aufweist, die im Bereich der Messleitung einen Plattenstapel bilden. Das erfindungsgemäße Verfahren kann insbesondere mit einer erfindungsgemäßen Vorrichtung durchgeführt werden, wodurch sich die in diesem Zusammenhang erläuterten Vorteile erzielen lassen.

Insbesondere im Hinblick auf die Messgenauigkeit ist es vorteilhaft, dass die Temperatur, der Druck und/oder die Geschwindigkeit der Flüssigkeit in der Messleitung ermittelt werden und die Ergebnisse beim Berechnen der geförderten Flüssigkeitsmenge einbezogen werden. Eine Temperaturerfassung erlaubt es, eine Temperatur-Mengen-Umwertung (TMU) durchzuführen und einen Bezug zur Viskositätskennlinie herzustellen. Bei bekanntem Produkt können die Temperatur, der Druck und/oder die Geschwindigkeit mit hinterlegten Tabellen und/oder Korrekturalgorithmen verrechnet werden. Mit den entsprechenden Ergebnissen kann der aktuelle Messwert für den Durchfluss und/oder den Füllgrad laufend korrigiert werden.

Häufig, beispielsweise bei der Heizölabgabe mittels eines Tankwagens, ist es erwünscht, den Abgabetank nicht in einem Zug vollständig zu entleeren, sondern das im Abgabetank enthaltene Produkt auf eine Vielzahl von Annahmestellen zu verteilen. Insbesondere kann hierfür vorgesehen sein, dass die Flüssigkeitsströmung in der Messleitung zumindest zeitweise gestoppt wird. Die Vorrichtung zur Mengenerfassung kann dann, vorzugsweise zusammen mit dem Tank, an einen anderen Abgabeort verbracht werden und die Abgabe wieder aufgenommen werden. Zum Stoppen der Strömung können entsprechende Sperrventile im Leitungsverlauf angeordnet sein.

Bei bekannten Messanlagen mit Gasmessverhüter ist in der Regel sichergestellt, dass das Leitungssystem im Bereich der Abgabeöffnung, insbesondere in dort vorgesehenen Vollschläuchen, mit Produkt ohne Gaseinschlüssen gefüllt ist. Nach der Erfindung werden hingegen Gaseinschlüsse zugelassen. Um sicherzustellen, dass der nächste Kunde nicht für Gaseinschlüsse sondern nur für das erhaltene Produkt bezahlt, ist die Kenntnis darüber wünschenswert, ob sich Gaseinschlüsse im abgabeseitigen Bereich des Leitungssystems, insbesondere im Vollschlauch befinden.
Wenn die Flüssigkeitsströmung zeitweise gestoppt wird, wird somit gemäß der Erfindung aus den Ergebnissen der Durchflussmessung und den Ergebnissen der Füllgradmessung eine abströmseitig der Durchflussmesseinrichtung und der Füllgradmesseinrichtung in der Messleitung befindliche Restflüssigkeitsmenge ermittelt. Diese Ausführungsform berücksichtigt, dass unterstromig der Messeinrichtungen eine signifikante Messleitungslänge vorhanden sein kann, in der nach dem Beenden der Abgabe Produkt einschließlich eventuell vorhandener Lufteinschlüsse verbleibt. Die Menge dieses verbleibenden Produktes wird als Restflüssigkeitsmenge erfasst, wobei bei der Bestimmung der Restflüssigkeitsmenge eventuell vorhandene Gaseinschlüsse berücksichtigt werden.

Beispielsweise kann abströmseitig der Messeinrichtungen ein so genannter Vollschlauch vorgesehen sein, d.h. ein Schlauch, der bei der Fahrt des Tankfahrzeuges von einer Abgabestelle zur nächsten gefüllt bleibt und der zum Aufrechterhalten der Befüllung im Bereich seiner endseitigen Abgabeöffnung ein Ventil aufweisen kann. Auch in dem Fall, dass die Produktabgabe beendet wird, nachdem Lufteinschlüsse zwar die Messeinrichtungen passiert haben, diese Lufteinschlüsse jedoch noch nicht im Zieltank angekommen sind sondern sich noch im Vollschlauch befinden, erlaubt es die genannte bevorzugte Ausführungsform, das abströmseitig der Messeinrichtungen im Vollschlauch befindliche Produktvolumen korrekt zu bestimmen. Dem nächsten Kunden kann somit das korrekte Produktvolumen zugeordnet werden.

Die Bestimmung der abströmseitig der Messeinrichtungen in der Messleitung befindlichen Restflüssigkeitsmenge kann bei bekannter Leitungslänge insbesondere durch Integration der Messwerte der Messeinrichtungen erfolgen. In die Berechnung der Restflüssigkeitsmenge kann insbesondere die Fließgeschwindigkeit der Flüssigkeit in der Messleitung sowie der Füllgrad einfließen. Vorzugsweise wird die ermittelte Restflüssigkeitsmenge jedenfalls bis zur Wiederaufnahme der Flüssigkeitsströmung in einem nicht flüchtigen Datenspeicher gespeichert. Die Erfindung ermöglicht es somit, die unterstromig der Messeinrichtungen befindlichen Gaseinschlüsse über verschiedene Abgabestationen zu verfolgen.

Insbesondere im Hinblick auf eine besonders hohe Präzision bei der Bestimmung der abgegebenen Fluidmenge ist es vorteilhaft, dass die ermittelte Restflüssigkeitsmenge von der ermittelten Flüssigkeitsmenge abgezogen wird und/oder dass die ermittelte Restflüssigkeitsmenge zu der nach einer Wiederaufnahme der Flüssigkeitsströmung ermittelten Flüssigkeitsmenge zumindest anteilsmäßig hinzuaddiert wird. Falls nach der Wideraufnahme der Strömung das unterstromig der Messeinrichtung angeordnete Volumen nur teilweise ersetzt wird, falls also nur wenig Flüssigkeit abgegeben wird, kann auch vorgesehen sein, die ermittelte Restflüssigkeitsmenge nach der Wiederaufnahme nur anteilsmäßig zu berücksichtigen.

Treten bei der Flüssigkeitsförderung Gaseinschlüsse auf, kann der gasbeladene Produktstrom den nicht beladenen Strom bei geeigneten Bedingungen im Sinne einer Flüssigkeitssäule vor sich herschieben, ohne dass eine Entmischung stattfindet. Für eine besonders hohe Messpräzision kann somit vorgesehen werden, dass die Restflüssigkeitsmenge ortsabhängig bestimmt wird. Diese Ausführungsform beinhaltet, dass die die Gaseinschlüsse unterstromig der Messeinrichtung in Abhängigkeit von ihrer Position im Leitungsverlauf erfasst und gespeichert werden. Dies ermöglicht eine besonders präzise Mengenbestimmung auch bei der Abgabe kleiner Flüssigkeitsmengen.

Unter Umständen können nicht nur die nachzuweisenden Füllgradänderungen sondern auch Änderungen anderer Produkteigenschaften, beispielsweise der Produktzusammensetzung und/oder der Produkttemperatur, zu einer Änderungen des Messsignals der Füllgradmesseinrichtung führen. Wenn beispielsweise eine kapazitive Füllgradmessung durchgeführt wird, kann eine Änderung der chemischen Flüssigkeitszusammensetzung zu einer Änderung der Dielektrizitätszahl führen, die von der Füllgradmesseinrichtung nachgewiesen wird. Damit derartige Änderungen insbesondere nicht fälschlicherweise als Änderungen des Füllgrades interpretiert werden, ist es erfindungsgemäß vorteilhaft, dass die Füllgradmesseinrichtung, insbesondere bei laufender Füllgradmessung, nachkalibriert wird.

Eine stetige Aktualisierung der Kalibrierung der Füllgradmesseinrichtung erfolgt geeigneterweise auf Grundlage der zuvor gemessenen Füllgrade und/oder unter Heranziehung von Plausibilitätskriterien. Beispielsweise kann vorgesehen sein, langsame Änderungen der Messwerte dem Produkt zuzuschreiben und diese Änderungen somit zur Nachkalibrierung der Füllgradmesseinrichtung heranzuziehen und nicht in die Mengenerfassung einzubeziehen. Insbesondere können auch solche Änderungen bei der Mengenerfassung unberücksichtigt bleiben und zur Nachkalibrierung verwendet werden, die eine Erhöhung der Dielektrizitätszahl beinhalten, da Gaseinschlüsse in Flüssigkeiten, insbesondere Kohlenwasserstoffen, in der Regel eine Verminderung der Dielektrizitätszahl mit sich bringen. Zeitlich schnellere Änderungen der Messwerte, insbesondere solche Änderungen, die eine Verringerung der Dielektrizitätszahl beinhalten, können hingegen Gaseinschlüssen zugeschrieben werden und bei der Flüssigkeitsmengenbestimmung berücksichtigt werden.

Das erfindungsgemäße Verfahren und die erfindungsgemäße Vorrichtung können vorteilhafterweise ein oder mehrere Merkmale der Offenbarung der deutschen Offenlegungsschrift DE 10 2005 005 295 A1 enthalten. Die DE 10 2005 005 295 A1 wird vollinhaltlich in den Gegenstand der vorliegenden Patentanmeldung mit einbezogen. Insbesondere die Restmengenerfassung, die Nachkalibrierung und die winklige Anordnung der Messleitung können als eigenständige Aspekte angesehen werden, die sich auch ohne eine Füllgradmesseinrichtung mit Elektrodenplatten und/oder einem Plattenstapel realisieren lassen, dies ist jedoch nicht Gegenstand der hier beanspruchten Erfindung.

Die Erfindung wird nachfolgend anhand bevorzugter Ausführungsbeispiele näher erläutert, die schematisch in den Figuren dargestellt sind. In den Figuren zeigen:
- Fig. 1: ein erstes Ausführungsbeispiel einer erfindungsgemäßen Vorrichtung zur Durchführung des erfindungsgemäßen Verfahrens, wobei der Abgabebereich der Messleitung nicht im Detail dargestellt ist;
- Fig. 2: der Abgabebereich der Vorrichtung aus Fig. 1;
- Fig. 3 und Fig. 4: Detailansichten des Verteilers der Vorrichtung aus Fig. 1;
- Fig. 5: eine weitere Ausführungsform einer erfindungsgemäßen Vorrichtung zur Durchführung des erfindungsgemäßen Verfahrens, wobei der Abgabebereich auch hier nicht im Detail dargestellt ist;
- Fig. 6: eine perspektivische Ansicht einer Füllgradmesseinrichtung zur Verwendung in einer der Vorrichtungen nach Fig. 1 oder 5;
- Fig. 7: die Füllgradmesseinrichtung aus Fig. 6, wobei die verdeckten Kanten gestrichelt dargestellt sind; und
- Fig. 8: die Füllgradmesseinrichtung aus den Figuren 6 und 7 in teilgeschnittener Ansicht.

Gleich wirkende Elemente sind in den Figuren mit denselben Bezugszeichen gekennzeichnet.

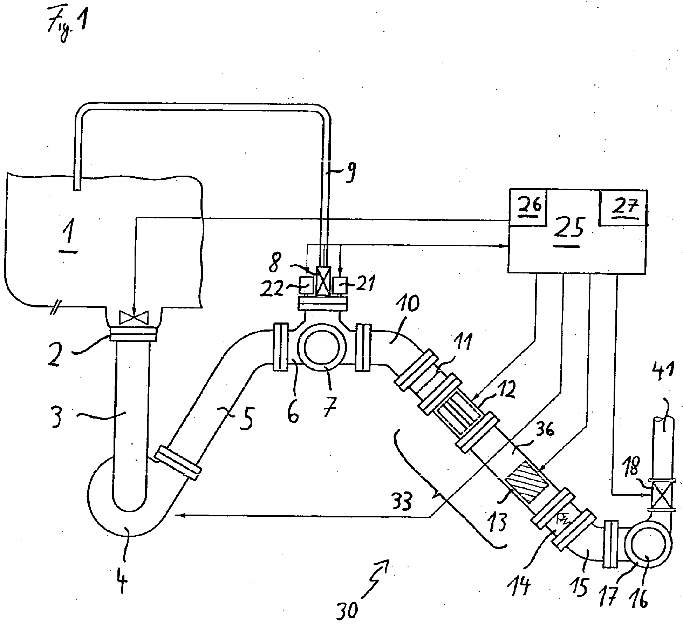

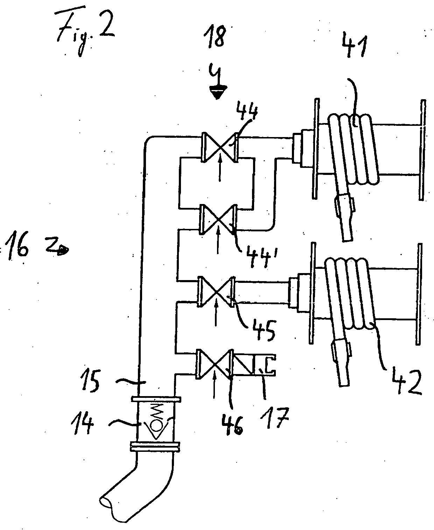

Ein erstes Ausführungsbeispiel einer erfindungsgemäßen Vorrichtung ist in den Figuren 1 und 2 dargestellt, wobei Fig. 2 den Abgabebereich der Vorrichtung zeigt.

Die Vorrichtung weist einen Tank 1 auf, in dem die abzugebende und dabei mengenmäßig zu erfassende Flüssigkeit aufgenommen ist. Dieser Tank 1 kann beispielsweise an einem Tankfahrzeug angeordnet sein. Bodenseitig am Tank 1 ist ein Bodenventil 2 vorgesehen. An dieses Bodenventil 2 ist eine Rohrleitung 3 angeschlossen, die zu einer Pumpe 4 führt. Die Pumpe 4 ist im tiefsten Punkt des Leitungssystems der Vorrichtung angeordnet. Von der Pumpe 4 führt eine steigende Rohrleitung 5 zu einem Verteiler 6, dessen Aufbau im Detail unten beschrieben ist. An den Verteiler 6 schließt sich eine weitere Rohrleitung 10 an, die zu einer Messstrecke 33 führt.

Eingangsseitig, d.h. auf der dem Tank 1 zugewandten Seite der Messstrecke 33 ist ein als Sieb ausgebildetes Filter 11 vorgesehen, das insbesondere auch zum Zerkleinern von Gasanteilen dienen kann. An das Filter 11 schließt sich in der Messstrecke 33 eine Füllgradmesseinrichtung 12 an, die gleichzeitig als Strömungsgleichrichter wirkt. An diese Füllgradmesseinrichtung 12 wiederum schließt sich in der Messstrecke 33 eine als Messturbine ausgebildete Durchflussmesseinrichtung 13 an. Oberstromig der Durchflussmesseinrichtung 13, d.h. auf der dem Tank 1 zugewandten Seite, kann zwischen der Durchflussmesseinrichtung 13 und der Füllgradmesseinrichtung 12 zweckmäßigerweise eine Beruhigungsstrecke 36 vorgesehen sein.

An die Durchflussmesseinrichtung 13 schließt sich im Leitungsverlauf unmittelbar, das heißt ohne längere Beruhigungsstrecke, ei n Rückschlagventil 14 an. Dieses Rückschlagventil 14 lässt eine aus dem Tank 1 gerichtete Strömung zu und kann hierbei einen Gegendruck erzeugen, welcher der Neigung der Flüssigkeit zum Mitreißen von Gasanteilen entgegenwirken kann. An das Rückschlagventil 14 schließt sich eine Rohrleitung 15 an und an diese wiederum ein zweiter Verteiler 16, der in Fig. 2 im Detail dargestellt ist. Die Rohrleitungen 10 und 15 bilden zusammen mit der Messstrecke 33 eine Messleitung 30.

Wie Fig. 2 zeigt sind am Verteiler 16 zwei Vollschläuche 41, 42 angeordnet, die im Bereich ihrer jeweiligen Abgabeöffnung jeweils ein Ventil aufweisen. Ferner ist eine Kupplung 17 für einen Leerschlauch am Verteiler 16 vorgesehen. Die einzelnen Schläuche sind über Ventile 44, 44', 45, 46 einer Ventilanordnung 18 mit dem zweiten Verteiler 16 verbunden. Zwischen dem ersten Vollschlauch 41 und dem Verteiler 16 sind zwei Ventile 44, 44' vorgesehen, wobei das zweite Ventil 44' in einer Umgehungsleitung angeordnet ist. Zwischen dem zweiten Vollschlauch 42 und dem Verteiler 16 ist einziges Ventil 45 angeordnet. Zwischen der Kupplung 17 für den Leerschlauch und dem Verteiler 16 ist ein Ventil 46 vorgesehen. Die Abgabe über den an die Kupplung 17 anzukoppelnden Leerschlauch und/oder die Vollschläuche 41, 42 kann beispielsweise im Pumpenbetrieb oder auch im Schwerkraftbetrieb erfolgen.

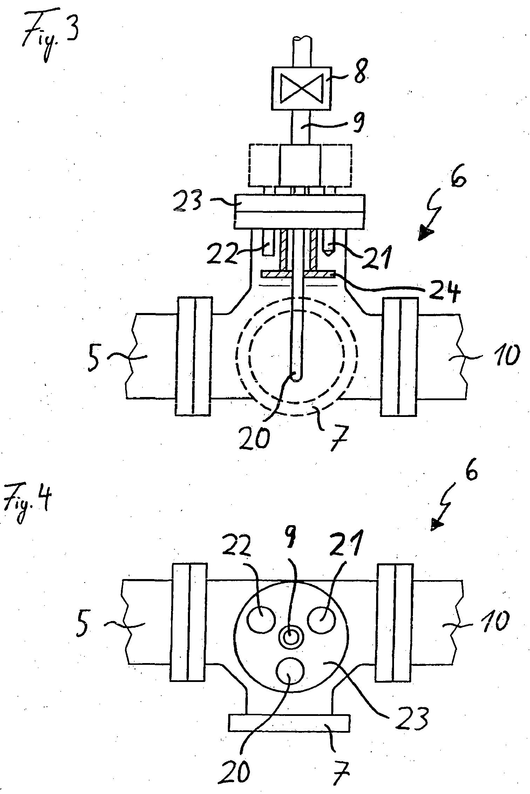

Der oberstromig der Messstrecke 33 angeordnete Verteiler 6 ist in den Figuren 3 und 4 im Detail gezeigt, wobei Fig. 3 eine Seitenansicht und Fig. 4 eine Draufsicht darstellt. Neben Anschlüssen für die beiden Rohrleitungen 5 und 10 ist am Verteiler 6 eine Kupplung 7 für einen Leerschlauch vorgesehen, über den Flüssigkeit ungemessen, beispielsweise zum Zwecke der Entrestung, aus dem Tank 1 abgegeben werden kann. In einem oberen Bereich des Verteilers 6 zweigt aus diesem eine Entlüftungsleitung 9 ab, die ins Innere des Tanks 1 zurückführt. An dieser Entlüftungsleitung 9 ist ein Entlüftungsventil 8 angeordnet. Die Entlüftungsleitung 9 ermöglicht ein Entlüften der Messleitung 30 beim Befüllen.

An einer Abdeck-Montageplatte 23 des Verteilers 6 sind zudem ein Temperatursensor 20, ein Benetzungssensor 21 sowie ein Drucksensor 22 für die in der Messleitung 30 strömende Flüssigkeit vorgesehen. Ferner ist ein etwa waagerecht verlaufendes Prallblech 24 vorgesehen, welches die in einem Seitenarm des Verteilers 6 angeordneten Sensoren 21, 22 vor einer unmittelbaren Einwirkung der durch die Leitungen 5 und 10 fließenden Hauptströmung schützt.

Wie Fig. 1 zeigt weist die Vorrichtung überdies einen als elektronischen Rechner ausgebildeten Controller 25 auf. Dieser Controller 25 steht mit der Füllgradmesseinrichtung 12 und der Durchflussmesseinrichtung 13 in Signalverbindung und weist eine Auswerteeinrichtung 26 auf, die aus den Messwerten der Messeinrichtungen 12 und 13 die geförderte Flüssigkeitsmenge bestimmt und ausgibt. Der Controller 25 steht darüber hinaus mit den Sensoren 20 bis 22 in Signalverbindung, wobei insbesondere die Signale des Temperatursensors 20 und des Drucksensors 22 in das ausgegebene Ergebnis für die geförderte Flüssigkeitsmenge einbezogen werden.

Der Controller 25 steht überdies mit dem Bodenventil 2, dem Entlüftungsventil 8, der abgabeseitigen Ventilanordnung 18 sowie mit der Pumpe 4 in Signalverbindung und weist eine Steuereinrichtung 27 zum Steuern dieser Elemente auf.

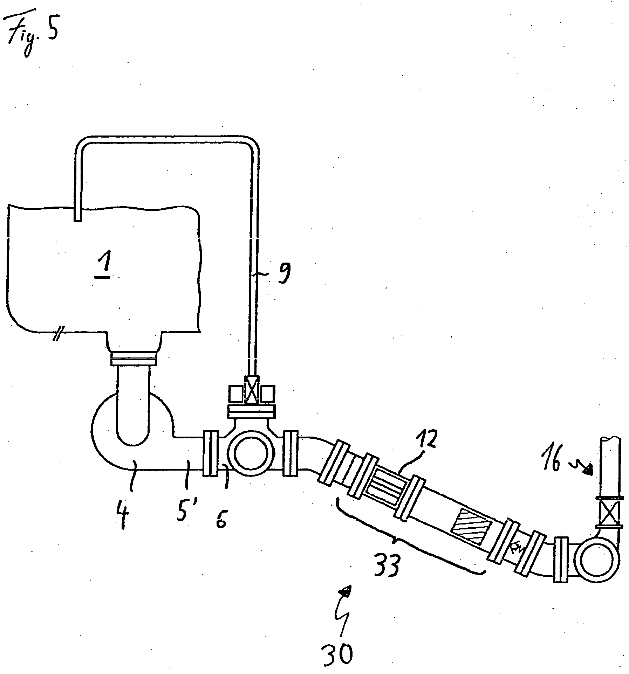

Ein weiteres Ausführungsbeispiel einer erfindungsgemäßen Vorrichtung zur Durchführung des erfindungsgemäßen Verfahrens ist in Fig. 5 dargestellt. Die Vorrichtung der Fig. 5 unterscheidet sich von der Vorrichtung der Fig. 1 darin, dass beim Ausführungsbeispiel der Fig. 5 die Pumpe 4 nach oben versetzt ist und ein waagerechter Pumpenäuslauf vorgesehen ist. Demgemäß verläuft die Rohrleitung 5' zwischen der Pumpe 4 und dem Verteiler 6 gemäß Fig. 5 zumindest annähernd waagerecht. Die Verteiler 6 und/oder 16 des Ausführungsbeispiels der Fig. 5 können wir in den Figuren 2 bis 4 dargestellt ausgestaltet sein.

Sowohl beim Ausführungsbeispiel der Fig. 1 als auch beim Ausführungsbeispiel der Fig. 5 ist die Messleitung 30, insbesondere deren Messstrecke 33, gegenüber der Horizontalen geneigt, wobei die Leitungshöhe mit zunehmendem Abstand vom Verteiler 6 und somit von der Entlüftungsleitung 9 abnimmt. Hierdurch ist eine automatische Entlüftungsfunktion gegeben, bei der sich in der Messstrecke 33 ansammelnde Gasblasen, insbesondere beim Befüllen des Systems, selbsttätig nach oben in Richtung der am Verteiler abzweigenden Entlüftungsleitung 9 bewegen. Beim Ausführungsbeispiel der Fig. 1 nimmt die Leitungshöhe beiderseits des Verteilers 6 mit zunehmendem Abstand vom Verteiler 6 und somit der Entlüftungsleitung 9 ab, so dass eine besonders wirksame automatische Entlüftung über einem großen Leitungsbereich gegeben ist.

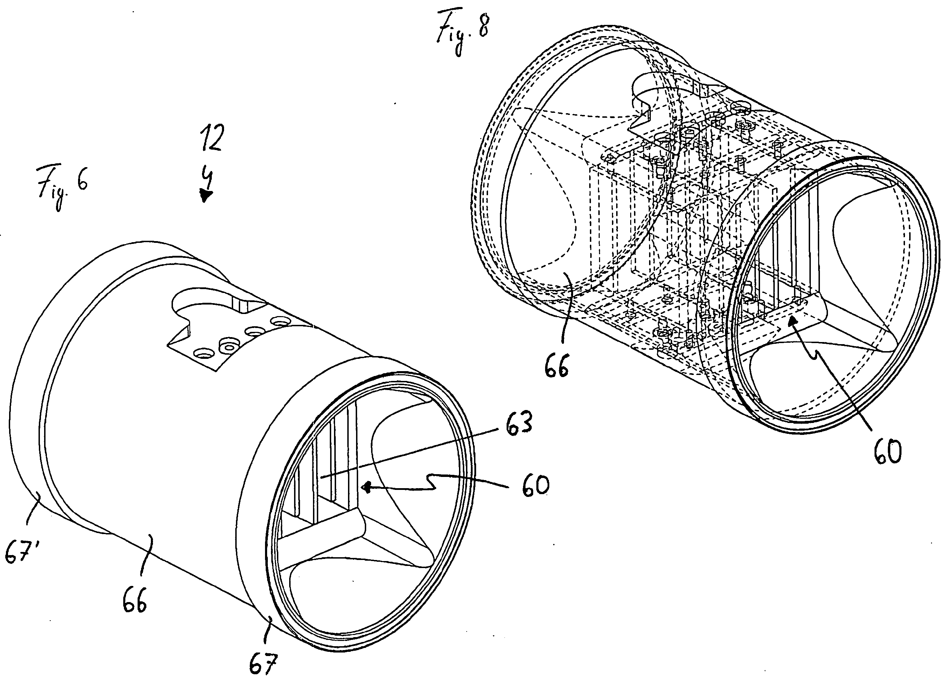

Die Füllgradmesseinrichtung 12 der Ausführungsbeispiele der Figuren 1 bis 5 ist im Detail in den Figuren 6 bis 8 beschrieben. Wie den Figuren 6 bis 8 zu entnehmen ist, weist die Füllgradmesseinrichtung 12 ein rohrartiges Gehäuse 66 auf, an dem endseitig zwei ringartige Anschlussbereiche 67, 67' zum Einbau der Füllgradmesseinrichtung 12 in den Messleitungsverlauf vorgesehen sind. Während das Gehäuse 66 im Bereich der Anschlussbereiche 67, 67' mit etwa kreisförmigem Innenquerschnitt ausgebildet ist, verjüngt sich der Innenquerschnitt zur Mitte des rohrförmigen Gehäuses 66 hin und ist dort mit einem rechteckigen Innenquerschnitt ausgebildet. Im Bereich des rechteckigen Innenquerschnittes ist ein Elektrodenplattenstapel 60 vorgesehen, der den Innenquerschnitt vollständig ausfüllt.

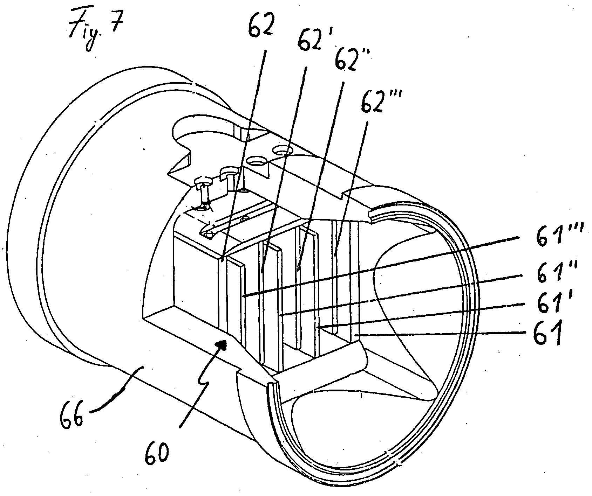

Wie insbesondere Fig. 7 zu entnehmen ist weist der Elektrodenplattenstapel 60 eine Vielzahl von Elektrodenplatten 61 bis 61'" und 62 bis 62'" auf, die als leitfähige Kondensatorplatten mit einer isolierenden Beschichtung ausgebildet sind. Diese Elektrodenplatten 61 bis 61'", 62 bis 62'" sind als Rechteckplatten ausgebildet, parallel zueinander angeordnet und erstrecken sich in Längsrichtung des rohrförmigen Gehäuses 66.

Die Elektrodenplatten 61 bis 61"' sind elektrisch miteinander verbunden und bilden eine erste Plattengruppe. Ebenso sind die Elektrodenplatten 62 bis 62'" elektrisch miteinander verbunden und bilden eine zweite Plattengruppe. Die Elektrodenplatten der beiden Gruppen sind abwechselnd angeordnet, so dass auf eine Elektrodenplatte 61 der ersten Plattengruppe eine Elektronenplatte 62"' der zweiten Plattengruppe und hierauf wieder eine Elektrodenplatte 61' der ersten Plattengruppe usw. folgt. Die Elektrodenplatten 61 bis 61'" der ersten Plattengruppe bilden somit mit den Elektrodenplatten 62 bis 62'" der zweiten Plattengruppe eine Interdigitalstruktur, bei der die Elektroden der beiden Plattengruppen fingerartig ineinander greifen. Benachbarte Elektrodenplatten 61, 62 sind dabei äquidistant angeordnet. Wie in Fig. 6 beispielhaft dargestellt ist, sind zwischen den Elektrodenplatten 61 und 62 eine Vielzahl von Durchgangskanälen 63 mit etwa rechteckigem Querschnitt ausgebildet, die ein Durchströmen der Füllgradmesseinrichtung 12 mit Flüssigkeit zulassen. Durch die Elektrodenplatten 61, 62 ist ein geschichteter Plattenkondensator gegeben, der eine besonders genaue Bestimmung der Dielektrizitätszahl εᵣ und somit des Füllgrades im Querschnitt der Füllgradmesseinrichtung 12 erlaubt.

Die in den Figuren dargestellten Messvorrichtungen können in einem erfindungsgemäßen Verfahren wie folgt betrieben werden:
Im Regelfall ist zu Beginn der Produktabgabe der gesamte Leitungsverlauf einschließlich der Messstrecke 33 und der Füllgradmesseinrichtung 12 mit Produkt, beispielsweise Heizöl, gefüllt. Zu Beginn der Abgabe wird ausgewählt, wo das Produkt abgegeben werden soll. Dies kann ungemessen über einen Leerschlauch an der Kupplung 7 oder gemessen über einen Leerschlauch an der Kupplung 17 erfolgen. Die Abgabe kann aber auch gemessen über die Vollschläuche 41 und 42 erfolgen.

Zur Abgabe beispielsweise über den Vollschlauch 42 wird das zugehörige Ventil 45 der Ventilanordnung 18 geöffnet. Ferner wird das Bodenventil 2 geöffnet und die Pumpe 4 gestartet. Der Verteiler 6 ist dabei zumindest bis zu dem als Leermeldesensor ausgebildeten Benetzungssensor 21, der auch als Bedeckungssensor bezeichnet werden kann, mit Produkt gefüllt. Über den Drucksensor 22 wird der Druck im Abgabesystem ermittelt. Der Temperatursensor 20 misst die Produkttemperatur, so dass eine Temperatür-Mengen-Umwertung durchgeführt werden kann.

Das vom Tank 1 und der Pumpe 4 kommende Fluid wird durch den Filter 11 gedrückt, der gegebenenfalls mitgeführte Teilchen von den Messeinrichtungen 12, 13 fernhält und große Gasblasen zerkleinert. Vom Filter 11 gelangt die Flüssigkeit in die Füllgradmesseinrichtung 12, die nach dem kapazitiven Prinzip mit einer homogenen Feldverteilung arbeitet. Ist diese Füllgradmesseinrichtung 12 vollständig mit einem Kraftstoff auf Kohlenwasserstoffbasis gefüllt, detektiert sie eine Dielektrizitätszahl εᵣ von ca. 3. Ein Einströmen einer Gasblase in die Füllgradmesseinrichtung bewirkt eine Änderung der relativen Dielektrizitätszahl εᵣ zwischen den Elektrodenplatten 61, 62. Die heraus resultierende Kapazitätsänderung wird messtechnisch erfasst und zur Füllgradbestimmung herangezogen.

Bei vollständig gefüllter Füllgradmesseinrichtung 12 zu Beginn des Abgabevorganges kann eine Kalibrierung der Füllgradmesseinrichtung 12 stattfinden, die nach Plausibilitätskriterien während der Abgabe aktualisiert werden kann.

Durch ihren konstruktiven Aufbau mit einer Vielzahl von Rechteckplatten im Strömungsverlauf wirkt die Füllgradmesseinrichtung 12 zugleich als Strömungsgleichrichter. Die aus der Füllgradmesseinrichtung 12 austretende, in der Regel annähernd laminare Strömung gelangt über die Beruhigungsstrecke 36 zur Durchflussmesseinrichtung 13, die eine Messturbine aufweist.

Die Messergebnisse der Füllgradmesseinrichtung 12 sowie der Durchflussmesseinrich-, tung 13 werden ebenso wie die Messergebnisse des Temperatursensors 20 und des Drucksensors 22 dem Controller 25 zugeführt. In dessen Auswerteeinrichtung 26 wird der von der Füllgradmesseinrichtung 12 gemessene Gasvolumenanteil fortlaufend mit dem von der Durchflussmesseinrichtung 13 erfassten Volumenstrom verrechnet und dabei der um die Gasanteile bereinigte tatsächliche Produktstrom durch die Messstrecke 33 ermittelt.

Die aus der Durchflussmesseinrichtung 13 austretende Flüssigkeit gelangt über das Rückschlagventil 14 und die Rohrleitung 15 in den Verteiler 16 und von dort über das zugehörige Ventil 45 in den beispielhaft ausgewählten Vollschlauch 42.

Wird der Tank 1 bei der Abgabe versehentlich oder gewollt sehr weit entleert, so kann es zu Strudelbildung und gegebenenfalls zu Gaseinschlüssen kommen, die unter Umständen vom Benetzungssensor 21 nicht detektiert werden können. Derartige Gaseinschlüsse werden jedoch von der Füllgradmesseinrichtung 12 nachgewiesen und hinsichtlich ihres Volumenanteiles erfasst. Sobald von der Füllgradmesseinrichtung 12 Lufteinschlag detektiert wird, kann die Fördergeschwindigkeit, beispielsweise durch entsprechende Ansteuerung der Pumpe 4, reduziert werden, wodurch die Tendenz zur Sogbildung kleiner wird und somit der Gasanteil wieder reduziert wird. Die entsprechende Steuerung der Fördergeschwindigkeit erfolgt dabei durch die Steuereinrichtung 27 des Controllers 25.

Um frühzeitig auf Lufteinschlag reagieren zu können, kann fakultativ vorgesehen sein, im Einlaufbereich der Pumpe 4, d.h. an der Rohrleitung 3, eine weitere Füllgradmesseinrichtung vorzusehen, die für eine besonders hohe Empfindlichkeit in Entsprechung zur Füllgradmesseinrichtung 12 ausgebildet sein kann.

Sofern der Tank 1 stets mit demselben, nicht verderblichen Produkt befüllt wird, kann vorgesehen sein, den Tank 1 bei der Abgabe im Normalbetrieb niemals völlig zu entleeren, so dass das Leitungssystem und insbesondere die Messleitung 30 in der Regel gefüllt bleiben. Auch in diesem Fall kann jedoch beispielsweise zu Reinigungszwecken eine so genannte Entrestung, d.h. ein vollständiges Entleeren des Leitungssystems mit der Messleitung 30 erforderlich werden. Nach einer Entrestung ist die Messstrecke 33 leer und muss befüllt werden. Dabei kann wie folgt vorgegangen werden:
Zu Beginn des Füllvorganges meldet der Benetzungssensor 21 den Zustand "leer", d.h. "Luft". Die Füllgradmesseinrichtung 12 meldet ebenfalls "leer", d.h. εᵣ = 1. Nun wird über das Entlüftungsventil 8 die Entlüftungsleitung 9 freigegeben. Das Bodenventil 2 wird geöffnet und das Produkt fließt durch Schwerkraftwirkung oder unter Zuhilfenahme der Pumpe 4 in die Messleitung 30. Die in der Messleitung 30 befindliche Luft entweicht über die Entlüftungsleitung 9.

Die Füllgradmesseinrichtung 12 detektiert während der Befüllung ein teilgefülltes Rohr, dessen Füllgrad kontinuierlich zunimmt. Ist die Füllgradmesseinrichtung 12 vollständig gefüllt, beträgt beispielsweise bei Heizöl die gemessene Dielektrizitätszahl εᵣ ungefähr 3, so kann vorgesehen sein, das weiter oben angeordnete Entlüftungsventil 8 fortan im getakteten Betrieb zu betreiben, um ein Überschießen der Befüllung in die Entlüftungsleitung 9 zu vermeiden.

Sobald der Benetzungssensor 21 anspricht und Benetzung anzeigt, wird das Ventil 8 geschlossen. Das System ist dann befüllt und die gemessene Abgabe kann gestartet werden.

Die Abgabe und/oder Annahme der Flüssigkeit kann erfindungsgemäß so vorgesehen sein, dass die Flüssigkeit im Regelfall keine Gasanteile aufweist. In besonderen Stadien der Abgabe beziehungsweise Annahme, insbesondere zu Beginn und/oder zum Ende der Abgabe beziehungsweise Annahme, beispielsweise wenn die Kammer oder der Abgabetank sehr weit entleert ist, können jedoch zumindest zeitweise Gasanteile auftreten. Insbesondere bei einer Manipulation am Leitungssystem und/oder beim Auftreten von Undichtigkeiten, beispielsweise an einer Kupplung oder einer Leitung, können auch dauerhaft Gasanteile in der Flüssigkeit enthalten sein.

Die Erfindung umfasst alle dieser beschriebenen Messsituationen. Soweit im Zusammenhang mit der Erfindung somit von einer einen Gasanteil aufweisenden Flüssigkeit oder einer zumindest zeitweise einen Gasanteil aufweisenden Flüssigkeit die Rede ist, kann dies beinhalten, dass die Flüssigkeit situationsbedingt dauerhaft einen Gasanteil aufweist, sporadisch einen Gasanteil aufweist und/oder im Regelfall überhaupt keinen Gasanteil aufweist.

## Patentansprüche

1. Verfahren zur Mengenerfassung einer in einer Messleitung (30) strömenden, zumindest zeitweise einen Gasanteil aufweisenden Flüssigkeit, beispielsweise Milch oder Kraftstoff, bei dem
- in der Messleitung (30) mittels einer Füllgradmesseinrichtung (12) eine Füllgradmessung durchgeführt wird,
- in der Messleitung (30) mittels einer Durchflussmesseinrichtung (13) eine Durchflussmessung durchgeführt wird,
- die geförderte Flüssigkeitsmenge aus den Ergebnissen der Durchflussmessung und denen der Füllgradmessung berechnet wird, und
- die Flüssigkeitsströmung in der Messleitung (30) zumindest zeitweise gestoppt wird,
**dadurch gekennzeichnet,**
- **dass** die Füllgradmesseinrichtung (12) eine Vielzahl von Elektrodenplatten (61, 62) aufweist, die im Bereich der Messleitung (30) einen Plattenstapel (60) bilden, und
- **dass** aus den Ergebnissen der Durchflussmessung und den Ergebnissen der Füllgradmessung eine abströmseitig der Durchflussmesseinrichtung (13) und der Füllgradmesseinrichtung (12) in der Messleitung (30) befindliche Restflüssigkeitsmenge ermittelt wird.

2. Verfahren nach Anspruch 1,
**dadurch gekennzeichnet,**
**dass** die Temperatur, der Druck und/oder die Geschwindigkeit der Flüssigkeit in der Messleitung (30) ermittelt werden und die Ergebnisse beim Berechnen der geförderten Flüssigkeitsmenge einbezogen werden.

3. Verfahren nach einem der vorstehenden Ansprüche,
**dadurch gekennzeichnet,**
- **dass** die ermittelte Restflüssigkeitsmenge von der ermittelten Flüssigkeitsmenge abgezogen wird und/oder
- **dass** die ermittelte Restflüssigkeitsmenge zu der nach einer Wiederaufnahme der Flüssigkeitsströmung ermittelten Flüssigkeitsmenge hinzuaddiert wird.

4. Verfahren nach einem der vorstehenden Ansprüche
**dadurch gekennzeichnet,**
**dass** die Füllgradmesseinrichtung (12) bei laufender Füllgradmessung nachkalibriert wird.

5. Vorrichtung zur Mengenerfassung bei der Annahme und/oder Abgabe einer einen Gasanteil aufweisenden Flüssigkeit, insbesondere Milch oder Kraftstoff, mit
- einer Messleitung (30) zum Durchleiten der Flüssigkeit,
- einer Durchflussmesseinrichtung (13) für die Flüssigkeit, die mit der Messleitung (30) in Fluidverbindung steht,
- einer Füllgradmesseinrichtung (12) für die Flüssigkeit, die mit der Messleitung (30) in Fluidverbindung steht, und die eine Elektrodenanordnung zum Bestimmen von elektrischen Eigenschaften der in der Messleitung befindlichen Flüssigkeit aufweist,
- einer Auswerteeinrichtung (26) zum Bestimmen der durch die Messleitung (30) geförderten Flüssigkeitsmenge, die mit der Füllgradmesseinrichtung (12) und der Durchflussmesseinrichtung (13) in Signalverbindung steht, und
- Mitteln zum zumindest zeitweisen Stoppen der Flüssigkeitsströmung in der Messleitung (30),
**dadurch gekennzeichnet,**
- **dass** die Elektrodenanordnung der Füllgradmesseinrichtung (12) eine Vielzahl von Elektrodenplatten (61, 62) aufweist, die im Bereich der Messleitung (30) einen Plattenstapel (60) bilden, und
- **dass** Mittel zum Ermitteln einer abströmseitig der Durchflussmesseinrichtung (13) und der Füllgradmesseinrichtung (12) in der Messleitung (30) befindlichen Restflüssigkeitsmenge aus den Ergebnissen einer Durchflussmessung und den Ergebnissen einer Füllgradmessung vorgesehen sind.

6. Vorrichtung nach Anspruch 5,
**dadurch gekennzeichnet,**
- **dass** zumindest eine der Elektrodenplatten (61, 62) des Plattenstapels (60) im Inneren der Messleitung (30) angeordnet ist,
- **dass** zumindest zwei Elektrodenplatten (61, 62) des Plattenstapels (60) parallel zueinander verlaufen,
- **dass** die Elektrodenplatten (61, 62) des Plattenstapels (60) äquidistant angeordnet sind,
- **dass** die Elektrodenplatten (61, 62) des Plattenstapels (60) zumindest annähernd dieselbe Oberflächengröße aufweisen und/oder
- **dass** die Elektrodenplatten (61, 62) des Plattenstapels (60) ebene Rechteckplatten sind.

7. Vorrichtung nach einem der Ansprüche 5 oder 6,
**dadurch gekennzeichnet,**
- **dass** die Elektrodenplatten (61, 62) in Längsrichtung der Messleitung (30) verlaufen, und
- **dass** zwischen den Elektrodenplatten (61, 62) Durchgangskanäle (63) für die Flüssigkeit ausgebildet sind, die sich in Längsrichtung der Messleitung (30) erstrecken.

8. Vorrichtung nach einem der Ansprüche 5 bis 7,
**dadurch gekennzeichnet,**
**dass** der Außenquerschnitt des Plattenstapels (60) zumindest annähernd dem, vorzugsweise rechteckigen, Innenquerschnitt der Messleitung (30) entspricht.

9. Vorrichtung nach einem der Ansprüche 5 bis 8,
**dadurch gekennzeichnet,**
**dass** die Elektrodenplatten (61, 62) des Plattenstapels (60) zu zwei Plattengruppen elektrisch zusammengeschaltet sind, die eine Interdigitalstruktur bilden.

10. Vorrichtung nach einem der Ansprüche 5 bis 9,
**dadurch gekennzeichnet,**
**dass** die Füllgradmesseinrichtung (12) eine kapazitive Messeinrichtung ist und/oder
**dass** die Elektrodenplatten (61, 62) gegenüber dem Inneren der Messleitung (30) elektrisch isoliert ausgebildet sind.

11. Vorrichtung nach einem der Ansprüche 5 bis 10,
**dadurch gekennzeichnet,**
**dass** die Durchflussmesseinrichtung (13) ein Turbinenzähler ist.

12. Vorrichtung nach einem der Ansprüche 5 bis 11,
**dadurch gekennzeichnet,**
**dass** ein Tank (1) vorgesehen ist, an dem die Messleitung (30) angeordnet ist.

13. Vorrichtung nach einem der Ansprüche 5 bis 12,
**dadurch gekennzeichnet,**
**dass** die Messleitung (30), insbesondere im Bereich der Durchflussmesseinrichtung (13) und/oder der Füllgradmesseinrichtung (12), geradlinig ausgebildet ist und/oder
**dass** die Messleitung (30), insbesondere im Bereich der Durchflussmesseinrichtung (13) und/oder der Füllgradmesseinrichtung (12), unter einem Winkel
zur Horizontalen verläuft, wobei die Höhe der Messleitung (30) vorzugsweise mit zunehmendem Abstand vom Tank abnimmt.

14. Vorrichtung nach einem der Ansprüche 5 bis 13,
**dadurch gekennzeichnet,**
**dass** die Durchflussmesseinrichtung (13) und die Füllgradmesseinrichtung (12) im Verlauf der Messleitung (30) unmittelbar hintereinander angeordnet sind.

15. Vorrichtung nach einem der Ansprüche 5 bis 14,
**dadurch gekennzeichnet,**
**dass** eine Steuereinrichtung (27) vorgesehen ist, mit welcher eine Strömung durch die Messleitung (30) in Abhängigkeit des gemessenen Füllgrades steuerbar ist.

16. Vorrichtung nach einem der Ansprüche 5 bis 15,
**dadurch gekennzeichnet,**
**dass** in der Messleitung (30) eine Zerkleinerungseinrichtung, insbesondere ein Sieb und/oder Filter (11), zum Zerkleinern von Gaseinschlüssen in der Flüssigkeit vor Erreichen der Füllgradmesseinrichtung (12) und/oder der Durchflussmesseinrichtung (13) vorgesehen ist.

## Claims

1. Method for detecting a volume of a fluid flowing in a measuring line (30), exhibiting a gas portion at least temporarily, for example milk or fuel, in which
- a filling level measurement is carried out in the measuring line (30) by means of a filling level measuring device (12),
- a flow measurement is carried out in the measuring line (30) by means of a flow measuring device (13),
- the required flow quantity is calculated from the results of the flow measurement and those of the filling level measurement and
- the fluid flow in the measuring line (30) is stopped at least temporarily,
**characterized in that**
- the filling level measuring device (12) exhibits a plurality of electrode plates (61, 62) which form a plate pack (60) in the region of the measuring line (30) and
- a residual fluid quantity located in the measuring line (30) on the outlet side of the flow measuring device (13) and the filling level measuring device (12) is determined from the results of the flow measurement and the results of the filling level measurement.

2. Method according to claim 1,
**characterized in that**
the temperature, the pressure and/or the speed of the fluid in the measuring line (30) are determined and the results included when calculating the quantity of fluid conveyed.

3. Method according to one of the preceding claims,
**characterized in that**
- the quantity of residual fluid determined is deducted from the quantity of fluid determined and/or
- the quantity of residual fluid determined is added to the quantity of fluid determined after the fluid flow has resumed.

4. Method according to one of the preceding claims,
**characterized in that**
the filling level measuring device (12) is recalibrated during the current filling level measurement.

5. Device for detecting a volume while receiving and/or discharging a fluid having a gas portion, in particular milk or fuel, with
- a measuring line (30) through which to conduct the fluid,
- a flow measuring device (13) for the fluid which is fluidically connected to the measuring line (30),
- a filling level measuring device (12) for the fluid which is fluidically connected to the measuring line (30) and which has an electrode assembly for determining electrical properties of the fluid located in the measuring line,
- an evaluating device (26) for determining the quantity of fluid conveyed through the measuring line (30) which is in signal contact with the filling level measuring device (12) and the flow measuring device (13) and
- means for at least temporarily stopping the fluid flow in the measuring line (30),
**characterized in that**
- the electrode arrangement of the filling level measuring device (12) has a plurality of electrode plates (61, 62) which form a plate pack (60) in the region of the measuring line (30) and
- means are provided for determining a residual fluid quantity from the results of a flow measurement and the results of a filling level measurement on the output flow side of the flow measuring device (13) and the filling level measuring device (12) in the measuring line (30).

6. Device according to claim 5,
**characterized in that**
- at least one of the electrode plates (61, 62) of the plate pack (60) is arranged inside the measuring line (30),
- at least two electrode plates (61, 62) of the plate pack (60) run parallel to one another,
- two electrode plates (61, 62) of the plate pack (60) are arranged equidistantly,
- the electrode plates (61, 62) of the plate pack (60) have at least approximately the same surface size and/or
- the electrode plates (61, 62) of the plate pack (60) are planar rectangular plates.

7. Device according to one of claims 5 or 6,
**characterized in that**
- the electrode plates (61, 62) run in the longitudinal direction of the measuring line (30) and
- through-channels (63) for the fluid are configured between the electrode plates (61, 62), which channels extend in the longitudinal direction of the measuring line (30).

8. Device according to one of claims 5 to 7
**characterized in that**
the outer cross section of the plate pack (60) corresponds at least approximately to the preferably rectangular inner cross section of the measuring line (30).

9. Device according to one of claims 5 to 8,
**characterized in that**
the electrode plates (61, 62) of the plate pack (60) are electrically interconnected to create two plate packs which form an interdigital structure.

10. Device according to one of claims 5 to 9,
**characterized in that**
the filling level measuring device (12) is a capacitive measuring device
and/or
the electrode plates (61, 62) are configured in an electrically insulated manner in respect of the inside of the measuring line (30).

11. Device according to one of claims 5 to 10,
**characterized in that**
the flow measuring device (13) is a turbine meter.

12. Device according to one of claims 5 to 11,
**characterized in that**
a tank (1) is provided on which the measuring line (30) is arranged.

13. Device according to one of claims 5 to 12,
**characterized in that**
the measuring line (30), particularly in the region of the flow measuring device (13) and/or the filling level measuring device (12) is configured in a straight line and/or
that the measuring line (30), particularly in the region of the flow measuring device (13) and/or the filling level measuring device (12) runs at an angle to the horizontal, wherein the height of the measuring line (30) preferably drops as the distance from the tank increases.

14. Device according to one of claims 5 to 13,
**characterized in that**
the flow measuring device (13) and the filling level measuring device (12) are arranged directly behind one another over the course of the measuring line (30).

15. Device according to one of claims 5 to 14,
**characterized in that**
a control device (27) is provided, with which a flow through the measuring line (30) can be controlled depending on the filling level measured.

16. Device according to one of claims 5 to 15,
**characterized in that**
a comminuting device, in particular a sieve and/or filter (11), for comminuting gas inclusions in the fluid before it reaches the filling level measuring device (12) and/or the flow measuring device (13) is provided in the measuring line (30).

## Revendications

1. Procédé pour la détection de la quantité d'un liquide s'écoulant dans une conduite de mesure (30), présentant au moins par moments une fraction gazeuse, par exemple du lait ou un carburant, dans lequel
- une mesure du taux de remplissage est réalisée dans la conduite de mesure (30) au moyen d'un dispositif de mesure de taux de remplissage (12),
- une mesure du débit étant réalisée dans la conduite de mesure (30) au moyen d'un dispositif de mesure de débit (13),
- la quantité de liquide transportée étant calculée à partir des résultats de la mesure du débit et de ceux de la mesure du taux de remplissage, et
- l'écoulement de liquide dans la conduite de mesure (30) étant interrompu au moins par moments,
**caractérisé en ce que**
- le dispositif de mesure du taux de remplissage (12) présente une pluralité de plaques d'électrodes (61, 62) qui forment une pile de plaques (60) dans la zone de la conduite de mesure (30), et
- **en ce que** l'on détermine, à partir des résultats de la mesure du débit et des résultats de la mesure du taux de remplissage, une quantité de liquide résiduelle se trouvant dans la conduite de mesure (30) en aval du dispositif de mesure de débit (13) et du dispositif de mesure de taux de remplissage (12).

2. Procédé selon la revendication 1,
**caractérisé en ce que**
la température, la pression et/ou la vitesse du liquide dans la conduite de mesure (30) sont déterminées, et **en ce que** les résultats sont pris en compte lors du calcul de la quantité de liquide transportée.

3. Procédé selon l'une des revendications précédentes,
**caractérisé en ce que**
- la quantité de liquide résiduelle déterminée est soustraite de la quantité de liquide déterminée et/ou
- **en ce que** la quantité de liquide résiduelle déterminée est additionnée à la quantité de liquide déterminée après une reprise de l'écoulement de liquide.

4. Procédé selon l'une des revendications précédentes,
**caractérisé en ce que**
le dispositif de mesure de taux de remplissage (12) est réétalonné alors que la mesure du taux de remplissage est en cours.

5. Dispositif pour la détection de la quantité lors de la réception et/ou de la délivrance d'un liquide présentant une fraction gazeuse, en particulier du lait ou un carburant, avec
- une conduite de mesure (30) pour faire passer le liquide,
- un dispositif de mesure de débit (13) pour le liquide, lequel est en liaison fluidique avec la conduite de mesure (30),
- un dispositif de mesure du taux de remplissage (12) pour le liquide, lequel est en liaison fluidique avec la conduite de mesure (30), et lequel présente un agencement d'électrodes pour la détermination de propriétés électriques du liquide se trouvant dans la conduite de mesure,
- un dispositif d'évaluation (26) pour la détermination de la quantité de liquide transportée à travers la conduite de mesure (30), lequel est en liaison de signalisation avec le dispositif de mesure de taux de remplissage (12) et le dispositif de mesure de débit (13), et
- des moyens pour l'arrêt au moins par moments de l'écoulement de liquide dans la conduite de mesure (30),
**caractérisé en ce que**
- l'agencement d'électrodes du dispositif de mesure de taux de remplissage (12) présente une pluralité de plaques d'électrodes (61, 62), lesquelles forment une pile de plaques (60) dans la zone de la conduite de mesure (30), et
- **en ce que** l'on prévoit des moyens pour déterminer une quantité de liquide résiduelle se trouvant dans la conduite de mesure (30), en aval du dispositif de mesure de débit (13) et du dispositif de mesure de taux de remplissage (12), à partir des résultats d'une mesure de débit et des résultats d'une mesure de taux de remplissage.

6. Dispositif selon la revendication 5,
**caractérisé en ce que**
- au moins l'une des plaques d'électrodes (61, 62) de la pile de plaques (60) est disposée à l'intérieur de la conduite de mesure (30),
- **en ce qu'**au moins deux plaques d'électrodes (61, 62) de la pile de plaques (60) s'étendent parallèlement l'une à l'autre,
- **en ce que** les plaques d'électrodes (61, 62) de la pile de plaques (60) sont disposées de manière équidistante,
- **en ce que** les plaques d'électrodes (61, 62) de la pile de plaques (60) présentent au moins approximativement la même taille de surface et/ou
- **en ce que** les plaques d'électrodes (61, 62) de la pile de plaques (60) sont des plaques rectangulaires planes.

7. Dispositif selon l'une des revendications 5 ou 6,
**caractérisé en ce que**
- les plaques d'électrodes (61, 62) s'étendent en direction longitudinale de la conduite de mesure (30), et
- **en ce que** des canaux de passage (63) pour le liquide sont formés entre les plaques d'électrodes (61, 62), lesquels s'étendent en direction longitudinale de la conduite de mesure (30).

8. Dispositif selon l'une des revendications 5 à 7,
**caractérisé en ce que**
le diamètre extérieur de la pile de plaques (60) correspond au moins approximativement au diamètre intérieur, de préférence rectangulaire, de la conduite de mesure (30).

9. Dispositif selon l'une des revendications 5 à 8,
**caractérisé en ce que**
les plaques d'électrodes (61, 62) de la pile de plaques (60) sont interconnectées électriquement en deux groupes de plaques qui forment une structure interdigitée.

10. Dispositif selon l'une des revendications 5 à 9,
**caractérisé en ce que**
le dispositif de mesure de taux de remplissage (12) est un dispositif de mesure capacitif, et/ou
**en ce que** les plaques d'électrodes (61, 62) sont réalisées de manière isolée électriquement par rapport à l'intérieur de la conduite de mesure (30).

11. Dispositif selon l'une des revendications 5 à 10,
**caractérisé en ce que**
le dispositif de mesure de débit (13) est un compteur à turbine.

12. Dispositif selon l'une des revendications 5 à 11,
**caractérisé en ce qu'**
un réservoir (1) est prévu, au niveau duquel une conduite de mesure (30) est mise en place.

13. Dispositif selon l'une des revendications 5 à 12,
**caractérisé en ce que**
la conduite de mesure (30) est réalisée de manière rectiligne, en particulier dans la zone du dispositif de mesure de débit (13) et/ou du dispositif de mesure de taux de remplissage (12), et/ou
**en ce que** la conduite de mesure (30) s'étend, en particulier dans la zone du dispositif de mesure de débit (13) et/ou du dispositif de mesure de taux de remplissage (12), selon un angle par rapport à l'horizontale, moyennant quoi la hauteur de la conduite de mesure (30) diminue de préférence avec l'augmentation de la distance par rapport au réservoir.

14. Dispositif selon l'une des revendications 5 à 13,
**caractérisé en ce que**
le dispositif de mesure de débit (13) et le dispositif de mesure de taux de remplissage (12) sont disposés directement l'un derrière l'autre sur le tracé de la conduite de mesure (30).

15. Dispositif selon l'une des revendications 5 à 14,
**caractérisé en ce que**
l'on prévoit un dispositif de commande (27) avec lequel il est possible de commander un écoulement à travers la conduite de mesure (30) en fonction du taux de remplissage mesuré.

16. Dispositif selon l'une des revendications 5 à 15,
**caractérisé en ce que**
l'on prévoit un dispositif de réduction dans la conduite de mesure (30), en particulier une passoire et/ou un filtre (11), pour réduire des inclusions de gaz dans le liquide avant l'atteinte du dispositif de mesure de taux de remplissage (12) et/ou du dispositif de mesure de débit (13).
